**Europäisches Patentamt**

**European Patent Office**

**Office européen des brevets**

(19)

(11) Veröffentlichungsnummer : **0 047 508 B2**

(12) **NEUE EUROPÄISCHE PATENTSCHRIFT**

(45) Veröffentlichungstag der neuen Patentschrift :
**16.06.93 Patentblatt 93/24**

(21) Anmeldenummer : **81106954.1**

(22) Anmeldetag : **04.09.81**

(51) Int. Cl.⁵ : **C09D 175/04,** C08G 18/80,
B05D 7/16

(54) Hitzehärtbares Beschichtungsmittel und dessen Verwendung.

Die Akte enthält technische Angaben, die nach
dem Eingang der Anmeldung eingereicht
wurden und die nicht in dieser Patentschrift
enthalten sind.

(30) Priorität : **06.09.80 DE 3033586**

(43) Veröffentlichungstag der Anmeldung :
**17.03.82 Patentblatt 82/11**

(45) Bekanntmachung des Hinweises auf die
Patenterteilung :
**07.03.84 Patentblatt 84/10**

(45) Bekanntmachung des Hinweises auf die
Entscheidung über den Einspruch :
**16.06.93 Patentblatt 93/24**

(84) Benannte Vertragsstaaten :
**AT BE CH DE FR GB IT LI LU NL SE**

(56) Entgegenhaltungen :
**DE-A- 1 519 244**
**DE-A- 1 644 711**
**DE-A- 2 346 818**
**FR-A- 1 521 866**
**FR-A- 2 243 983**
**GB-A- 779 247**

(73) Patentinhaber : **Schramm Lacke GmbH**
**Kettelerstrasse 100**
**6050 Offenbach (DE)**

(72) Erfinder : **Bauchhenss, Jürgen**
**Limesstrasse 20**
**W-6057 Dietzenbach-Steinberg (DE)**

(74) Vertreter : **Weber, Dieter, Dr. et al**
**Dr. Dieter Weber und Dipl.-Phys. Klaus Seiffert**
**Patentanwälte Gustav-Freytag-Strasse 25**
**Postfach 6145**
**W-6200 Wiesbaden 1 (DE)**

EP 0 047 508 B2

## Beschreibung

Zum Beschichten beispielsweise von Metallgegenständen sind flüssige hitzehärtbare Beschichtungsmittel bekannt, die aus einer Lösung eines hydroxylfunktionellen Bindemittels, wie eines Polyesters mit Hydroxylgruppen, und eines geblockten Polyisocyanates in einem organischen Lösungsmittel bestehen, z.B. aus der FR-A-2 243 983. Gehärtete Beschichtungen aus solchen Beschichtungsmitteln besitzen relativ gute Lichtbeständigkeit und Wetterbeständigkeit, doch haben sie mässige mechanische Verformbarkeitseigenschaften und relativ schlechte Abriebfestigkeit. Dies ist besonders gravierend, wenn die Beschichtungsmittel zum Beschichten von Metallblechen verwendet werden sollen, die anschliessend an die Beschichtung verformt werden.

Es ist weiterhin bekannt, metallische Gegenstände mit Polyamiden in Pulverform mit Hilfe des Wirbelsinterverfahrens zu beschichten. Solche Beschichtungen haben gute Eigenschaften, doch ist die Anwendung des Wirbelsinterverfahrens nur in bestimmten Fällen durchführbar und ausserdem sehr umständlich und aufwendig. Ausserdem haben solche Polyamidüberzüge die Eigenschaft, lösungsmittelanquellbar zu sein. Die Folge daraus ist Haftverlust auf metallischen Untergründen trotz Einsatzes geeigneter Haftvermittler.

Schliesslich beschreibt die DE-A-1 644 711, insbesondere in Beispiel 1, kalthärtende Beschichtungsmittel aus einem hydroxylfunktionellen Bindemittel, einem ungeblockten Polyisocyanat und einem darin suspendieten Polyamid. Diese Beschichtungsmittel lassen sich nur schlecht verarbeiten, da das Bindemittel bereits bei Umgebungstemperatur mit dem ungeblockten Polyisocyanat reagiert. Insbesondere die mechanische Verformbarkeit solcher Beschichtungen ist schlecht, so dass die Anwendbarkeit dieser Beschichtungsmittel begrenzt ist. Gemäss Seite 4, Zeile 9 und Beispiel 1 liegt die maximale Korngrösse bei 250 bzw. 200 $\mu$m und gemäss Beispiel 1 der Polyamidgehalt bei etwa 4,7 Gewichts-%. Eine Schüttdichte des Polyamids ist in der DE-A-1 644 711 nicht als wesentlich erwähnt.

Die der Erfindung zugrundeliegende Aufgabe bestand nun darin, neue hitzehärtbare Beschichtungsmittel zu bekommen, die aus einem flüssigen System aufbringbar sind und nach der Hitzehärtung eine wetterbeständige und lichtbeständige Beschichtung mit guter mechanischer Verformbarkeit, guter Abriebfestigkeit und guter Chemikalienfestigkeit ergeben.

Diese Aufgabe wird erfindungsgemäß mit hitzehärtbaren Beschichtungsmitteln gelöst, die aus einer Lösung eines hydroxylfunktionellen Bindemittels und eines geblockten Polyisocyanates in einem diese beiden Bestandteile lösenden organischen Lösungsmittel und gegebenenfalls üblichen Pigmenten, Pigmentfarbstoffen, Füllstoffen und anderen Zusatzstoffen bestehen und dadurch gekennzeichnet sind, daß sie ein suspendiertes, in dem Lösungsmittel im wesentlichen nicht gelöstes, feinteiliges Polyamid mit 10 bis 13 C-Atomen je Carbonamidgruppe, einer Korngröße von maximal 60 $\mu$m und einer Schüttdichte von 0,20 bis 0,60 in einer Menge von 5 bis 40 Gew.-% des Beschichtungsmittels enthalten und daß die Beschichtungsmittel 20 bis 40 Gew.-% von hydroxylfunktionellem Bindemittel und geblocktem Polyisocyanat zusammen enthalten.

Diese erfindungsgemässen Beschichtungsmittel können nach den verschiedensten bekannten grosstechnischen Aufbringungsverfahren für flüssige Systeme aufgetragen werden, wie mit Walzlackierverfahren, Bandlackierverfahren (Coil-Coating), im Spritzverfahren, Rakelverfahren oder Gießverfahren. Besondere Vorteile hat dieses Verfahren zur Beschichtung von Metallteilen, wie Metallblechen, die zu Gegenständen verarbeitet werden, welche langzeitig der Witterung und UV-Bestrahlung ausgesetzt sind.

Die aus den erfindungsgemässen Beschichtungsmitteln durch Hitzehärtung erhaltenen Beschichtungen unterscheiden sich in ihren Eigenschaften sowohl von bekannten Reaktionsprodukten hydroxylfunktioneller Bindemittel mit Polyisocyanaten als auch von bekannten Polyamidbeschichtungen. So haben die erfindungsgemäss erhaltenen Beschichtungen beispielsweise im Gegensatz zu polyisocyanatmodifizierten Polyestern hervorragende mechanische Verformbarkeit und im Gegensatz zu Polyamidbeschichtungen gute Lösungsmittelbeständigkeit, etwa gegenüber Methyläthylketon. Die Ursache hierfür ist darin zu sehen, dass das Polyamid mit den Isocyanatgruppen reagiert und chemisch gesehen ein neues Beschichtungssystem ergibt.

In den erfindungsgemässen Beschichtungsmitteln können als Polyamide Homo- und Copolyamide, einzeln oder im Gemisch miteinander, verwendet werden. Beispiele brauchbarer Polyamide sind Polyamid 10, Poly-11-undecanoamid, Poly-12-dodecanoamid (Polyamid 12) und Polyamid 13. Die Copolyamide sind Polyamide, die aus unterschiedlichen Einheinten aufgebaut sind. Bei ihnen errechnet sich die C-Atomzahl als Summe aller C-Atome im Molekül, geteilt durch die Zahl der Carbonamidgruppen im Molekül. Die Verwendung von Poly-12-dodecanoamid ist besonders günstig.

Es ist zweckmässig, das Polyamid in feinteiliger Form einzusetzen, und zwar vorzugsweise mit einer Korngrösse von maximal 40 $\mu$m (nach DIN 53734) und mit einer Schüttdichte von vorzugsweise 0,30 bis 0,50 (nach DIN 53468).

Die Polyamide sind in den lösungsmittelhaltigen Beschichtungsmitteln nach der Erfindung vorzugsweise in einer Menge von 10 bis 30 Gewichts-% enthalten.

Als weitere Komponente enthalten die Beschichtungsmittel ein hydroxylfunktionelles Bindemittel, das in der Lage ist, mit Isocyanatgruppen des Polyisocyanates zu reagieren. Solche hydroxylfunktionellen Bindemittel können beispielsweise Polyester, Polyole, Polyäther, Poly urethane, Polyacrylate, Polyglycole, Polyvinylverbindungen, Melaminharze, Epoxyharze, Harnstoffharze oder andere Polymere mit Hydroxylgruppen sein. Bevorzugt ist das hydroxylfunktionelle Bindemittel ein hydroxylgruppenhaltiger Polyester bzw. ein Oxyester.

Die weitere Komponente der Beschichtungsmittel besteht aus wenigstens einem geblockten Polyisocyanat, das aliphatischer, cycloaliphatischer oder aromatischer Natur sein kann. Cycloaliphatische Polyisocyanate werden als bevorzugt für die Erfindung angesehen.

Wenn hier von Polyisocyanaten die Rede ist, so handelt es sich in erster Linie um Diisocyanate, obwohl das Polyisocyamatmolekül auch mehr als zwei Isocyanatgruppen enthalten kann, wie beispielsweise in Triisocyanaten oder Tetraisocyanaten. Die geblockten Polyisocyanate sind handelsübliche Verbindungen, die zur Blockung der Isocyanatgruppen beispielsweise mit einem Alkohol, mit Caprolactam, mit einem Phenol oder mit einem Glycol umgesetzt sein können. Ein besonders für die Erfindung vorteilhaftes geblocktes Polyisocyanat ist ein caprolactamblockiertes Addukt des Isophorondiisocyanates.

"In den erfindungsgemäßen Beschichtungsmitteln beträgt das Verhältnis von hydroxylfunktionellem Bindemittel zu geblocktem Polyisocyanat gewöhnlich 0,5 bis 5:1, vorzugsweise 1 bis 1:3."

Das in den Beschichtungsmitteln verwendete organische Lösungsmittel kann aus wenigstens einem aromatischen Kohlenwasserstoff, Ester, Äther, Keton, Alkohol, aliphatischem Kohlenwasserstoff, Ätheralkohol oder einer anderen flüssigen organischen Verbindung bestehen, vorausgesetzt dass diese das hydroxylfunktionelle Bindemittel und das geblockte Polyisocyanat löst. Das Polyamid wird von dem Lösungsmittel nicht in Lösung gebracht, so dass das Beschichtungsmittel insgesamt eine Suspension ist.

Besonders bevorzugte Lösungsmittel für die Erfindung sind hochsiedende Aromaten, Ester und Glycole.

Ausser den oben diskutierten Komponenten können die erfindungsgemässen Beschichtungsmittel übliche Pigmente, Pigmentfarbstoffe, Füllstoffe und andere übliche Zusatzstoffe enthalten. Als farbige Einstellungen zusetzbare Pigmente kommen beispielsweise Titandioxid (Rutil) oder anorganische Buntpigmente, wie Chrom-, Nikkel-, Kobalt- und Eisenoxidpigmente, metallisierende Pigmente, wie Aluminiumbronze, sowie hitzefeste und licht- und wetterstabile Pigmentfarbstoffe in Betracht. Die Beschichtungsmittel nach der Erfindung können aber auch in unpigmentierter und ungefärbter Form hergestellt werden, um durchsichtige Überzüge zu bekommen.

Die Herstellung der Bindemittel nach der Erfindung erfolgt gewöhnlich so, dass zunächst das geblockte Polyisocyanat und das hydroxylfunktionelle Bindemittel in dem Lösungsmittel gelöst werden und darauf das Polyamid in feinteiliger Form zu der Lösung zugesetzt wird. Sofern dem Beschichtungsmittel noch weitere unlösliche Bestandteile, wie Pigmente, Füllstoffe und dergleichen, zugesetzt werden, können diese entweder der Lösung zugegeben werden oder erforderlichenfalls mit den in der Lackindustrie üblichen Mahlaggregaten dispergiert werden.

Die erfindungsgemässen Beschichtungsmittel können sowohl als Einschichtsystem oder über Grundierungen im Walzverfahren, Bandbeschichtungsverfahren, Spritz-, Rakel- oder Giessverfahren aufgetragen werden. Besonders eignen sich hierfür metallische Untergründe, wie Metallbleche. Zweckmässig wird das Beschichtungsmittel über einer üblichen Grundierung, etwa auf Polyesterbasis oder auf der Basis gesättigter Polyester-Melaminharz-Kombinationen oder auf Epoxidharzgrundierungen aufgetragen.

Die Aushärtung und Sinterung erfolgt bei einer Temperatur von gewöhnlich 200 bis 260 °C, wobei die Einbrennzeit z.B. bei der Bandbeschichtung 25 bis 50 Sek., beim Spritzverfahren je nach der Stärke des Trägermaterials bis zu 15 Minuten beträgt. Die erzielbaren Trockenfilmdicken des Beschichtungsmittels können beispielsweise zwischen 20 und 250 µm liegen.

Die erzielten technologischen und physikalischen Eigenschaften der ausgehärteten Beschichtungen entsprechen in jeder Hinsicht den maximalen Forderungen, die an eine wetterbeständige, aber auch hochverformungsfähige Aussenbeschichtung gestellt werden. Die Haftfestigkeit der Beschichtungen auf den angeführten Grundierungen (Polyester-Melaminharz-Kombination oder Epoxidharz) ist hervorragend. Die Verformungseigenschaften, wie z.B. der T-bend-Test, der Impact-Test und die Erichsentiefung lassen nicht nur den Einsatz für vorbeschichtetes Trägermaterial zu, sondern prädestinieren diesen Beschichtungsstoff besonders für das Bandlakkierverfahren. Die physikalischen Kurzzeit-Prüfungen, wie Weather-o-meter (Atlas), Feuchtraumklima-Konstant (DIN 50 017 SK), Kesternich DIN 50 018, Salzsprühtest DIN 50 021 (ASTM B 117), Wassereinlagerung bei 40 °C und UV-Beständigkeits-Prüfung sowie die Prüfungen der Aussenbewitterung erbringen sehr gute Ergebnisse.

Die Erfindung wird durch die folgenden Beispiele weiter erläutert. In diesen Beispielen sind alle Anteile und Prozentsätze auf das Gewicht bezogen.

Beispiel 1

Eine Aluminiumplatte von 1 mm Dicke, vorbehandelt mit Chromatierung Alodine 1200 E (Warenzeichen), wurde mit einer Grundierung auf der Basis von gesättigtem Polyesterharz-Melaminharz versehen. Diese wurde mit einem Spiralrakel aufgetragen und anschliessend 40 Sekunden bei einer Trägermaterial-Temperatur von 230 bis 240°C eingebrannt. Sodann wurde mit einem Beschichtungsmittel folgender Zusammensetzung überzogen:

| | |
|---|---|
| Caprolactamblockiertes Addukt von Isophorondiisocyanat (IPDI)/ hydroxylgruppenhaltiger Oxyester (Gewichtsverhältnis 23,4:36,6) | 25 Teile |
| Titandioxid | 20 Teile |
| Polyamid 12 | 15 Teile |
| aromatisches Kohlenwasserstofflösungsmittel (230 bis 290 °C Siedebereich) | 10 Teile |
| aromatisches Kohlenwasserstofflösungsmittel (185 bis 210 °C Siedebereich) | 12 Teile |
| Äthylenglycolmono-äthylätheracetat | 6 Teile |
| Diäthylenglycolmono-butylätheracetat | 2 Teile |
| Tetrahydronaphthalin | 5 Teile |
| Diäthylenglycolmono-n-butyläther | 5 Teile |
| | 100 Teile |

Die Herstellung des Beschichtungsmittels erfolgte nach den üblichen Verfahren der Lackfertigung, d.h. Dispergieren mit einem Dissolver, Mahlung mit einer Perl-Mill, Einstellung der Viskosität mit Lösungsmitteln.

Die Auftragsweise erfolgte mit dem Spiralrakel. Ausgehärtet wurde bei einer Objekttemperatur der Aluminiumplatte von 250 bis 260°C in der Zeit von 40 Sekunden. Die Trockenfilmauflage war 30 bis 40 µm, die Gesamttrockenfilmauflage, d.h. Grundierung und Beschichtungsstoff weiss lag bei 50 µm.

Solchermassen beschichtete Testbleche wurden nach Coil-Coating-Bedingungen mechanisch und physikalisch geprüft.

Tabelle I

| | |
|---|---|
| Gitterschnitt nach DIN 53 151 | Kennwert GT O |
| Abriebfestigkeit (Tabler-Abraser) CS 10 Abriebräder 1000 g Belastung 1000 Umdrehungen: | 60 mg Abrieb = 18 µm |
| Bleistifthärte (Ritzhärte nach Wolf-Wilborn) | F |
| Tiefung nach DIN 53 156 | 8–9 mm |
| Schlagprüfung (Impact-Test) | 80 inchpound (1 ln = 2.54 × 10⁻²m. 1 lb=0.4536 Kg) |
| T-bend-Test | T 1 |

Tabelle II

| | |
|---|---|
| Weather-O-meter (Atlas) Kohlenbogenlicht | 1000 h i.O. |
| UV-Beständigkeit (Quarzlampe Q 600) | 24 h i.O. |
| Feuchtraumklima DIN 50 017 SK | 1000 h i.O. |
| Kesternich DIN 50 018 | 10 Runden i.O. |
| Salzsprühtest DIN 50 021 ASTM B 117 | 1000 h i.O. |
| Wassereinlagerung bei 40 °C | 1000 h i.O. |

## Beispiel 2

Eine Stahlplatte, 1 mm dicke, phosphatiert (Granodine C 6005) und eine Stahlplatte, sendzimirverzinkt, 1 mm dick, vorbehandelt mit Phosphatierung (Bonder 1303, Warenzeichen), wurde mit der gleichen Grundierung und dem gleichen Beschichtungsmittel sowie nach dem gleichen Verfahren wie in Beispiel 1 beschichtet und eingebrannt.

Es wurden die gleichen Ergebnisse bei der technologischen und physikalischen Prüfung erreicht wie bei Beispiel 1, siehe Tabelle I und II.

## Beispiel 3

Ein Formkörper aus Stahl, Materialdicke 1 mm, metallrein und mit Trichloräthylen entfettet, wurde mit einem Beschichtungsmittel folgender Zusammensetzung im Spritzverfahren (Handspritzpistole, Luftzerstäubung) beschichtet:

| | |
|---|---|
| IPDI/Oxyester wie in Beispiel 1 | 20 Teile |
| Dibutylzinndilaurat | 0,2 Teile |
| Titandioxid (Rutiltype) | 20 Teile |
| Siliciumdioxid (Aerosil 380, Warenzeichen) | 0,5 Teile |
| Polyamid 12 | 20 Teile |
| aromatisches Kohlenwasserstoff-Lösungsmittel (230 bis 290 °C Siedebereich) | 5 Teile |
| aromatisches Kohlenwasserstoff-Lösungsmittel (185 bis 210 °C Siedebereich) | 17 Teile |
| Äthylenglycolmonoäthylätheracetat | 8 Teile |
| Tetrahydronaphthalin | 5 Teile |
| Diäthylenglycolmono-n-butyläther | 4,3 Teile |
| | 100,0 Teile |

Die Herstellung des Beschichtungsstoffes erfolgte nach dem im Beispiel 1 geschilderten Verfahren.

Das Objekt wurde im Spritzverfahren mit ca. 200 bis 250 μm Nassfilmstärke beschichtet und ohne Ablüftzeit bei 240 bis 250 °C Umlufttemperatur im Einbrennofen in 15 Minuten eingebrannt. Die kurzfristig erreichte Objekttemperatur lag bei 240 bis 245 °C. Die erzielte Trockenfilmauflage liegt zwischen 120 und 150 μm. Die mechanische und physikalischen Filmeigenschaften entsprechen den Werten wie sie in den Tabellen I und II (Beispiel 1) aufgeführt sind.

## Patentansprüche

1. Hitzehärtbares Beschichtungsmittel, bestehend aus einer Lösung eines hydroxylfunktionellen Bindemittels und eines geblockten Polyisocyanates in einem diese beiden Bestandteile lösenden organischen Lösungsmittel und gegebenenfalls üblichen Pigmenten, Pigmentfarbstoffen, Füllstoffen und anderen Zusatzstoffen, **dadurch gekennzeichnet,** daß es ein suspendiertes, in dem Lösungsmittel im wesentlichen nicht gelöstes, feinteiliges Polyamid mit 10 bis 13 C-Atomen je Carbonamidgruppe, einer Korngröße von

5

maximal 60 μm und einer Schüttdichte von 0,20 bis 0,60 in einer Menge von 5 bis 40 Gew.-% des Beschichtungsmittels enthält und das Beschichtungsmittel 20 bis 40 Gew.-% von hydroxylfunktionellem Bindemittel und geblocktem Polyisocyanat zusammen enthält.

2. Beschichtungsmittel nach Anspruch 1, **dadurch gekennzeichnet,** daß es als Polyamid wenigstens eines mit 11 bis 13 C-Atomen je Carbonamidgruppe enthält.

3. Beschichtungsmittel nach Anspruch 1 und 2, **dadurch gekennzeichnet,** daß es als Polyamid Poly-12-dodecanoamid enthält.

4. Beschichtungsmittel nach Anspruch 1 bis 3, **dadurch gekennzeichnet,** daß das Polyamid eine Korngröße von maximal 40 μm und eine Schüttdichte von 0,30 bis 0,50 hat.

5. Beschichtungsmittel nach Anspruch 1 bis 4, **dadurch gekennzeichnet,** daß es 10 bis 30 Gew.-% des Polyamids enthält.

6. Beschichtungsmittel nach Anspruch 1 bis 5, **dadurch gekennzeichnet,** daß es als geblocktes Polyisocyanat ein caprolactamblockiertes Addukt von Isophorondiisocyanat enthält.

7. Beschichtungsmittel nach Anspruch 1, **dadurch gekennzeichnet,** daß es ein Verhältnis von hydroxylfunktionellem Bindemittel zu geblocktem Polyisocyanat von 1 bis 3 : 1 enthält.

8. Verwendung eines Beschichtungsmittels nach Anspruch 1 bis 7 zum Beschichten von metallischen Gegenständen im Bandlakkierverfahren.

**Claims**

1. A heat-setting coating agent comprising a solution of a hydroxyl-functional binding agent and a blocked polyisocyanate in an organic solvent which dissolves those two components, and optionally usual pigments, pigment colouring substances, fillers and other additive substances, **characterized in** that it contains a suspended, finely divided polyamide substantially not dissolved within the solvent and having from 10 to 13 carbon atoms per carbonamide group a grain size of a maximum of 60 μm and a bulk density of from 0.20 to 0.60 in an amount of from 5 to 40 % by weight of the coating agent and that the coating agent contains from 20 to 40 % by weight of hydroxyl-functional binding agent and blocked polyisocyanate together.

2. A coating agent according to claim 1 **characterized in** that, as the polyamide, it contains at least one having from 11 to 13 carbon atoms per carbonamide group.

3. A coating agent according to claim 1 and claim 2 **characterized in** that it contains poly-12-dodecanoamide as the polyamide.

4. A coating agent according to claims 1 to 3 **characterized in** that the polyamide has a grain size of a maximum of 40 μm, and a bulk density of from 0.30 to 0.50.

5. A coating agent according to claims 1 to 4 **characterized in** that it contains from 10 to 30 % by weight of the polyamide.

6. A coating agent according to claim 1 to 5 **characterized in** that the blocked polyisocyanate contained therein is a caprolactam-blocked adduct of isophorone diisocyanate.

7. A coating agent according to claim 1 **chracterized in** that it has a ratio of hydroxyl-functional bindung agent to blocked polyisocyanate of from 1 to 3 : 1.

8. Use of a coating agent according to claims 1 to 7 for coating metal articles by a coil coating process.

**Revendications**

1. Composition de revêtement thermodurcissable, composée d'un solution d'un liant à fonction hydroxyle et d'un polyisocyanate bloqué dans un solvant organique dissolvant ces deux constituants, et éventuellement de pigments, colorants pigmentaires, charges et autres additifs courants, **caractérisée en** ce qu'il contient un polyamide finement divisé en suspension, ne dissous presque pas dans le solvant ayant 10 à 13 atomes de carbone par groupe carbonamide une granulométrie maximale de 60 $\mu$m et une densité apparente de 0,20 à 0,60, et qu'il est contenue en une quantité de 5 à 40 % en poids de la composition de revêtement, et que le composition de revêtement contient de 20 à 40 %, en poids du liant à fonction hydroxyle et d'un polyisocyanate bloqué, pris ensemble.

2. Composition de revêtement selon la revendication 1, **caractérisée en** ce qu'elle contient en tant que polyamide au moins un polyamide ayant 11 à 13 atomes de carbone par groupe carbonamide.

3. Composition de revêtement selon la revendication 1 ou 2, **caractérisée en** ce qu'elle contient en tant que polyamide le poly--12-dodécanamide.

4. Composition de revêtement selon l'une des revendications 1 à 3, **caractérisée en** ce que le polyamide a une granulométrie maximale de 40 $\mu$m, et une densité apparente de 0,30 à 0,50.

5. Composition de revêtement selon l'une des revendications 1 à 4, **caractérisée en** ce qu'elle contient 10 à 30 % en poids du polyamide.

6. Composition de revêtement selon l'une des revendications 1 à 5, **caractérisée en** ce qu'elle contient en tant que polyisocyanate bloqué un produits d'addition, bloqué au caprolactame, du diisocyanate d'isophorone.

7. Composition de revêtement selon la revendication 1, **caractérisée en** ce qu'elle contient un rapport entre le liant à fonction hydroxyle et le polyisocyanate bloqué compris entre 1 et 3 : 1.

8. Utilisation d'une composition de revêtement selon l'une des revendications 1 à 7 pour revêtir des objets métalliques dans le procedé du laquage en bande.